# EUROPEAN PATENT APPLICATION

(11) **EP 4 583 261 A1**
(43) Date of publication of application: **09.07.2025**
(21) Application number: 23862101.5
(22) Date of filing: 01.08.2023
(51) Int. Cl.: H01M 50/103, H01M 50/15, H01M 50/169

(54) **BATTERY HOUSING AND BATTERY**

(30) Priority: 05.09.2022 CN 202222356572 U
(71) Applicant: China Ruilong Technology Co., Ltd., Suzhou, Jiangsu 215000 (CN)
(72) Inventor: CHEN, Haifeng, Suzhou, Jiangsu 215000 (CN)
(74) Representative: Winter, Brandl - Partnerschaft mbB
(86) International application number: PCT/CN2023/110593
(87) International publication number: WO 2024/051401

(57) **Abstract**

A battery housing and a battery, relating to the technical field of batteries. The battery housing comprises a shell and a cover plate. The shell comprises a side frame, and the side frame comprises a first open end. The cover plate is arranged at the first open end. One of the shell and the cover plate is provided with an annular recess, and the other one of the shell and the cover plate is matched with the recess. When the cover plate covers the first open end of the shell, the cover plate and the shell are limited by matching by means of the recess, to prevent the cover plate from moving relative to the shell during welding, so that it is more convenient to weld, and it is conducive to ensuring the dimensional accuracy of the prepared battery housing.

## Description

INFORMATION OF PRIORITY: The present application claims priority to Chinese Utility Model Patent Application No. 202222356572.6, filed on September 5, 2022, the entire contents of which are incorporated herein by reference.

### Technical Field

The present disclosure relates to the technical field of batteries, and in particular to a battery housing and a battery.

### Background

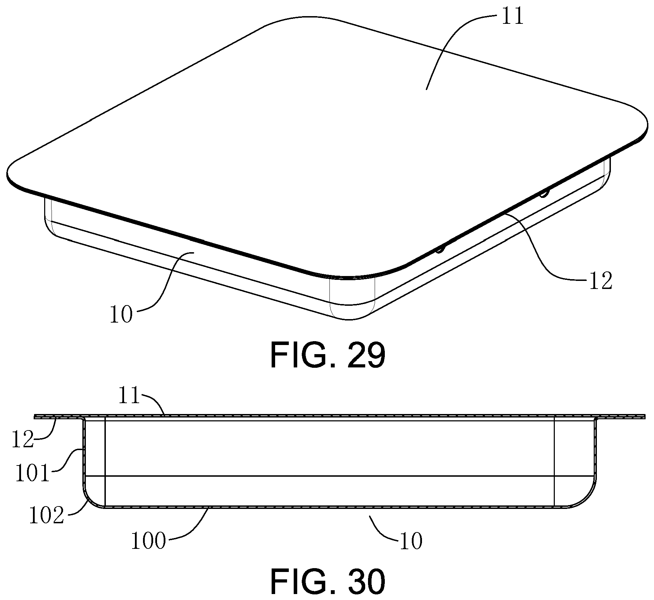

In related technologies, some batteries adopt alloys as battery housings. The alloys have higher hardness and ductility and have low thickness without the need of wider sealing edges and folding edges, thereby decreasing the volume of the batteries, and further improving the volume energy density of the batteries. For example, FIG. 29 and FIG. 30 show a battery housing in related technologies. The battery housing includes a lower shell 10 and an upper cover 11 sealing the lower shell 10, an upper edge of the lower shell 10 forms a flange edge 12 protruding and extending to an outer periphery, and the upper cover 11 is fitted with the flange edge 12. The lower shell 10 includes a bottom plate 100 and a side frame 101, and a joint between the bottom plate 100 and the side frame 101 is transited by a rounded corner 102.

The flange edge 12 and the upper cover 11 are connected by a welding manner. During welding, the upper cover 11 needs to be placed on an upper surface of the flange edge 12. Since fitted surfaces of the two are relatively flat, relative movement is likely to be caused during the welding, thus affecting a dimensional precision of the manufactured battery housing. To maintain relative fixation of positions of the upper cover 11 and the lower shell 10, a special jig is needed for positioning during the welding, such that outer peripheral surfaces of the upper cover 11 and the flange edge 12 are basically flush, thereby ensuring the dimensional precision of the manufactured battery housing.

In addition, in related technologies, the lower shell 10 is formed by way of a stamping process, and the bottom plate 100 and the side frame 101 of the lower shell are integrated. Due to characteristics of the stamping process, the rounded corner 102 is inevitably located at the joint between the bottom plate 100 and the side frame 101. Under the presence of the rounded corner 102, the volume of the lower shell 10 is decreased, and meanwhile a shape of a cell is restricted, such that the volume of the cell is decreased, and the volume of the lower shell 10 cannot be fully utilized, thus affecting the capacity of a battery.

In addition, the flange edge 12 of the battery housing needs to be cut during battery installation, and it is difficult to ensure the cutting quality and precision during cutting, thereby bringing more troubles to use the battery.

Therefore, it is necessary to improve the prior art to overcome the defects of the prior art.

### SUMMARY

An objective of the present disclosure is to provide a battery housing and a battery. A cover plate of the battery housing can be conveniently positioned on a shell.

To achieve the foregoing invention objective, in one aspect, the present disclosure provides a battery housing, including:
a shell, including a side frame, where the side frame includes a first open end; and
a cover plate, disposed at the first open end; and
one of the shell and the cover plate is provided with an annular recessed portion, and the other one is fitted with the recessed portion.

Further, a covering direction of the cover plate is consistent with a recessing direction of the recessed portion.

Further, an end surface of the first open end is provided with the recessed portion, the recessed portion is communicated with an inner cavity of the side frame, and an outer edge of the cover plate is fitted into the recessed portion.

Further, an outer edge of the cover plate is provided with the recessed portion, the recessed portion is communicated with a first outer peripheral surface of the cover plate and a surface of the cover plate facing the shell, and the first open end is fitted into the recessed portion.

Further, the shell further includes an outer ring body connected to the side frame, a surface of the outer ring body facing the cover plate is provided with the recessed portion, and the cover plate includes a body and a limiting portion extending from an outer edge of the body into the recessed portion.

Further, the cover plate includes at least two of the limiting portions disposed at an angle; alternatively,
the limiting portion is in an annular shape.

Further, the cover plate is integrally formed; and the shell is integrally formed.

Further, the outer ring body includes a connecting plate portion fitted with the body, and the recessed portion is located on an outer side of the connecting plate portion.

Further, the shell further includes a bottom plate connected to the side frame, the bottom plate and the cover plate are located at two ends of the side frame, respectively, and the bottom plate and the side frame are integrally formed.

Further, the side frame is in a tube shape and further includes a second open end, the shell includes a bottom plate connected to the second open end, the cover plate and the bottom plate seal the first open end and the second open end, respectively, and structures of the cover plate and the bottom plate are the same or different.

Further, the battery housing further includes a positive electrode assembly connected to the shell, the positive electrode assembly includes a positive metal part, a conductive sheet located on an inner side of the shell, an inner insulation member separating the conductive sheet and the shell, and an outer insulation member separating the positive metal part and the shell, and the positive metal part includes a positive plate located on an outer side of the shell and a connecting column extending from the positive plate into the shell and connected to the conductive sheet.

Further, the outer insulation member includes an outer insulation sheet located between an outer surface of the shell and the positive plate and bosses surrounding an outer periphery of the positive plate;
a quantity of the bosses is at least two, and a through slot is formed between any two of the adjacent bosses; alternatively,
the bosses are in an annular shape and are provided with the through slots communicated with inner and outer walls thereof.

Further, the inner insulation member includes an inner insulation sheet disposed between an inner surface of the shell and the conductive sheet, and when the positive electrode assembly is inclined, the inner insulation sheet is in contact with the cover plate or the bottom plate of the shell in advance of the conductive sheet.

Further, a second outer peripheral surface of the inner insulation sheet is located outside a third outer peripheral surface of the conductive sheet, the inner insulation member further includes an isolation boss connected to the inner insulation sheet, and the isolation boss is located outside the conductive sheet and is used for preventing the conductive sheet from exceeding the second outer peripheral surface of the inner insulation sheet.

Further, the isolation boss is in an annular shape surrounding an outer periphery of the conductive sheet, the isolation boss is provided with a notch, and the conductive sheet is observable through the notch in a peripheral direction of the inner insulation member.

Further, the battery housing further includes a negative plate electrically connected to the shell, the shell is provided with a liquid injection hole, the battery housing further includes a liquid blocking plug connected to the shell and sealing the liquid injection hole, the shell, the cover plate and the liquid blocking plug are made of an alloy material, and the alloy material is stainless steel.

In another aspect, the present disclosure provides a battery, including the battery housing as described above.

Compared with the prior art, the present disclosure has the following beneficial effects.

According to at least one embodiment of the present disclosure, the battery housing includes a shell and a cover plate, one of the shell and the cover plate is provided with an annular recessed portion, and the other one is fitted with the recessed portion. When the cover plate covers the first open end of the shell, the cover plate and the shell are limited by way of fitting with the recessed portion to prevent the cover plate from moving relative to the shell during welding, such that a positional accuracy is better, the welding is more convenient, and convenience is provided for ensuring a dimensional precision of the manufactured battery housing.

### BRIEF DESCRIPTION OF THE DRAWINGS

FIG. 1 is a schematic structural diagram of a battery housing in Embodiment 1.
FIG. 2 is a schematic structural diagram of a shell in Embodiment 1.
FIG. 3 is a cross sectional view of a side wall at a first open end in Embodiment 1.
FIG. 4 is a partial enlarged view of a position I in FIG. 3.
FIG. 5 is a connection schematic diagram of a cover plate and a side frame in Embodiment 1, and in the figure, a second surface is obliquely disposed.
FIG. 6 is a front view of the battery housing in Embodiment 1.
FIG. 7 is a sectional view sectioned along a section line A-A in FIG. 6.
FIG. 8 is a partial enlarged view of a position II in FIG. 7.
FIG. 9 is an explosive view of the battery housing in Embodiment 1.
FIG. 10 is a sectional view of an insulation member of the battery housing in Embodiment 1.
FIG. 11 is a connection schematic diagram of an outer insulation member and a positive plate of the battery housing in Embodiment 1.
FIG. 12 is a connection schematic diagram of the outer insulation member and the positive plate of the battery housing in Embodiment 1.
FIG. 13 is a connection schematic diagram of the outer insulation member and the positive plate of the battery housing in Embodiment 1.
FIG. 14 is a schematic structural diagram of a positive electrode assembly of the battery housing in Embodiment 1.
FIG. 15 is a connection schematic diagram of an inner insulation member and an inner conductive sheet in Embodiment 1.
FIG. 16 is a connection schematic diagram of the inner insulation member and the inner conductive sheet in Embodiment 1.
FIG. 17 is a sectional schematic diagram of the positive electrode assembly of the battery housing in Embodiment 1.
FIG. 18 is a sectional view of a battery housing in Embodiment 2.
FIG. 19 is a cross sectional view of an edge of a cover plate in Embodiment 2.
FIG. 20 is a partial enlarged view of III in FIG. 18.
FIG. 21 is a connection schematic diagram of the cover plate and the side frame in Embodiment 1, and in the figure, a fourth surface is obliquely disposed.
FIG. 22 is a sectional view of a battery housing in Embodiment 3.
FIG. 23 is a partial enlarged view of a position IV in FIG. 22.
FIG. 24 is a sectional view of the battery housing in Embodiment 3.
FIG. 25 is a partial enlarged view of a position V in FIG. 24.
FIG. 26 is a schematic diagram of an L-shaped cover plate in Embodiment 3.
FIG. 27 is a sectional view of a battery housing in Embodiment 4.
FIG. 28 is a partial enlarged view of a position VI in FIG. 27.
FIG. 29 is a schematic structural diagram of a battery housing according to an embodiment in related technologies.
FIG. 30 is a sectional view of the battery housing shown in FIG. 29.

### DESCRIPTION OF THE EMBODIMENTS

To make the foregoing objectives, features and advantages of the present application understood more obviously and easily, specific implementations of the present application are illustrated in detail below in conjunction with the attached drawings. It is to be understood that specific embodiments described herein are intended only to interpret the present application, rather than to limit the present application. In addition, it should also be explained that to facilitate the description, the attached drawings only show a part, rather than all of structures, that are related to the present application. Based on the embodiments in the present application, all other embodiments obtained by a person of ordinary skill in the art without exerting creative efforts shall fall within the scope of protection of the present application.

The terms "include" and "have" in the present application as well as any variations thereof are intended to cover non-exclusive inclusions. For example, a process, method, system, product or device including a series of steps or units is not limited to listed steps or units, but optionally further includes steps or units that are not listed, or optionally further includes other steps or units that are inherent to the process, method, product or device.

Reference to the "embodiments" herein means that particular features, structures or characteristics described in conjunction with the embodiments may be included in at least one embodiment of the present application. The phrase referred at various positions of the specification neither necessarily indicates same embodiments, nor indicates independent or alternative embodiments that are mutually exclusive to other embodiments. A person skilled in the art explicitly or implicitly understands that the embodiments described herein may be combined with other embodiments.

### Embodiment 1

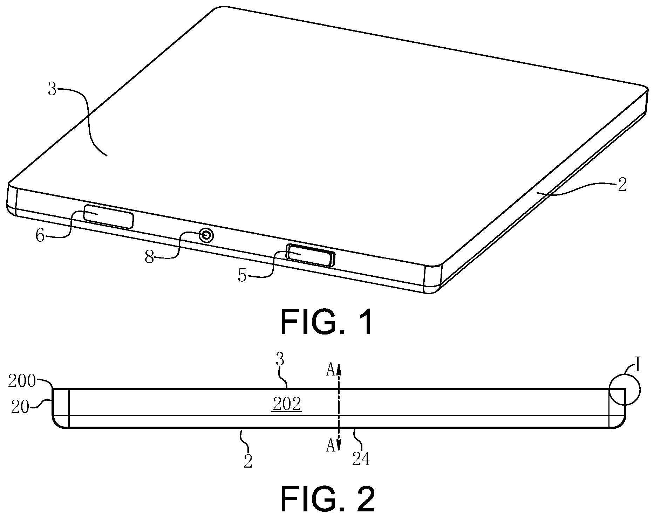

As shown in FIG. 1, the present embodiment provides a battery housing, including a shell 2 and a cover plate 3.

The shape of the battery housing is not limited. For example, in the embodiment shown in FIG. 1, the battery housing is in a rectangular shape as a whole. In other embodiments, the battery housing may also be in an L shape, a round shape, a triangular shape, or other shapes.

The shell 2 includes a side frame 20. The side frame 20 is in a sealed annular shape and includes a first open end 200. The cover plate 3 is disposed at the first open end 200, which is connected to the first open end 200 and seals the first open end 200. A space for accommodating cells and other parts is formed between the shell 2 and the cover plate 3.

One of the shell 2 and the cover plate 3 is provided with an annular recessed portion 4, and the other one is fitted with the recessed portion 4. The shell 2 and the cover plate 3 are positioned by way of fitting between the recessed portion 4 and the shell 2 or the cover plate 3 to prevent the two from moving relative to each other in a welding process, such that positions are more accurate.

As a preferred implementation, a covering direction of the cover plate 3 is consistent with a recessing direction of the recessed portion 4. In this way, when the cover plate 3 covers the first open end 200 of the shell 2, the cover plate can be covered on the shell 2 in the recessing direction of the recessed portion 4, such that the cover plate 3 and the shell 2 are fitted through the recessed portion 4 during covering. Preferably, the covering direction of the cover plate 3 is consistent with an axis direction A of the side frame 20. In this case, the recessed portion 4 is sunken into the shell 2 or the cover plate 3 in the axis direction A.

In the present embodiment, as shown in FIG. 2 to FIG. 4, an end surface 201 of the first open end 200 is provided with the recessed portion 4, the recessed portion 4 is communicated with an inner cavity 202 of the side frame 20, and an outer edge of the cover plate 3 is fitted into the recessed portion 4. In this way, the degree of freedom of the cover plate 3 in a peripheral direction is limited by the side frame 20, horizontal movement cannot be achieved, and positions of the cover plate and the shell 2 are more accurate, thereby better facilitating welding operation.

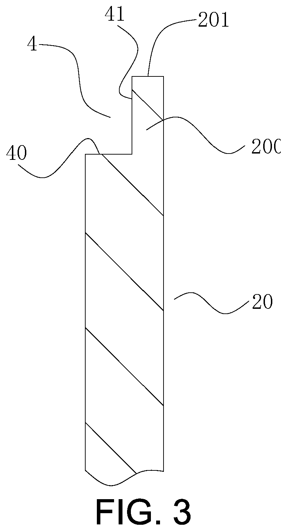

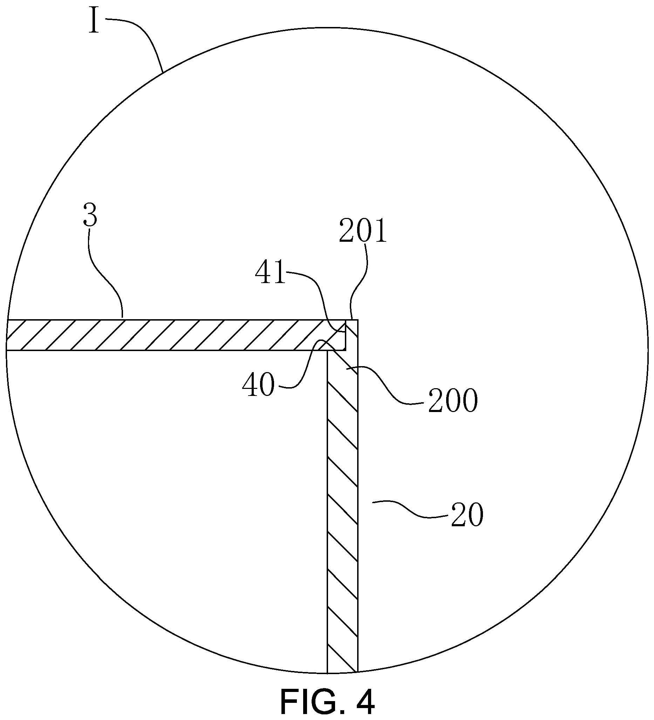

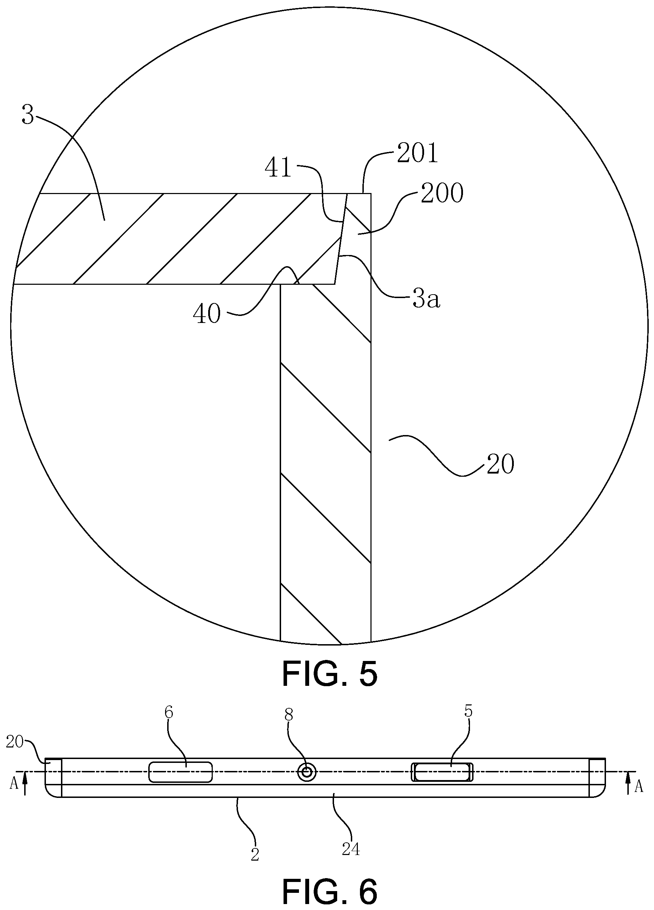

The recessed portion 4 has a first surface 40 and a second surface 41 disposed at an angle, the first surface 40 is used for being fitted with the cover plate 3, and the second surface 41 is in an annular shape. In some implementations, as shown in FIG. 3 and FIG. 4, the first surface 40 and the second surface 41 are perpendicular to each other. In other implementations, as shown in FIG. 5, the second surface 41 is obliquely disposed, which is a pyramidal surface gradually increased toward the outside, and can achieve a guiding effect to facilitate the arrangement of the cover plate 3 in the recessed portion 4. Preferably, a first outer peripheral surface 3a of the cover plate 3 is also a pyramidal surface adapted to the second surface 41 to reduce gaps between the two and improve the sealability.

In the present embodiment, as shown in FIG. 2, the shell 2 further includes a bottom plate 24 connected to the side frame 20, the bottom plate 24 and the cover plate 3 are located at two ends of the side frame 20, respectively, and the bottom plate 24 and the side frame 20 are integrally formed. For example, the bottom plate 24 and the side frame 20 of the shell 2 can be formed by a stretch forming manner, and the shell 2 only has the first open end 200.

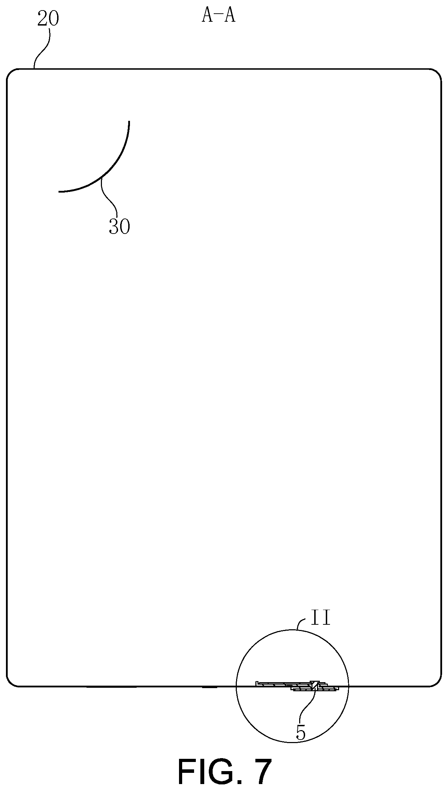

As a preferred implementation, as shown in FIG. 6 and FIG. 7, an anti-explosion valve 30 can be disposed on the cover plate 3 or the shell 2 (for example, on the side frame 20 or the bottom plate 24) to improve the use safety of a battery. The anti-explosion valve 30 is preferably in an arc-shaped groove shape, further preferably in the shape of a quarter of a circular arc. The anti-explosion valve 30 is preferably disposed at a corner of the cover plate 3.

The battery housing further includes a positive electrode assembly 5 connected to the shell 2. Referring to FIG. 6 to FIG. 9, the positive electrode assembly 5 is connected to the side frame 20 and includes a positive metal part 50, a conductive sheet 51 located on an inner side of the shell 2, an inner insulation member 52 separating the conductive sheet 51 and the shell 2, and an outer insulation member 53 separating the positive metal part 50 and the shell 2.

The positive metal part 50 includes a positive plate 500 located on an outer side of the shell 2 and a connecting column 501 disposed on the positive plate 500. The connecting column 501 is connected to the conductive sheet 51 after passing through the outer insulation member 53, the side frame 20 and the inner insulation member 52. A material of the positive metal part 50 may be, for example, aluminum, which is in conductive connection with the conductive sheet 51. The conductive sheet 51 is used for being electrically connected to a first lug of a battery cell. A material of the conductive sheet 51 is preferably the same as that of the positive metal part 50. Preferably, the positive metal part 50 is connected to the shell 2 by a riveting manner, the connecting column 501 of the positive metal part passes through an end portion of the conductive sheet 51 and is riveted to form an externally convex limiting protrusion portion 502, and the limiting protrusion portion 502 simultaneously fixes the conductive sheet 51, the inner insulation member 52 and the outer insulation member 53 to the shell 2.

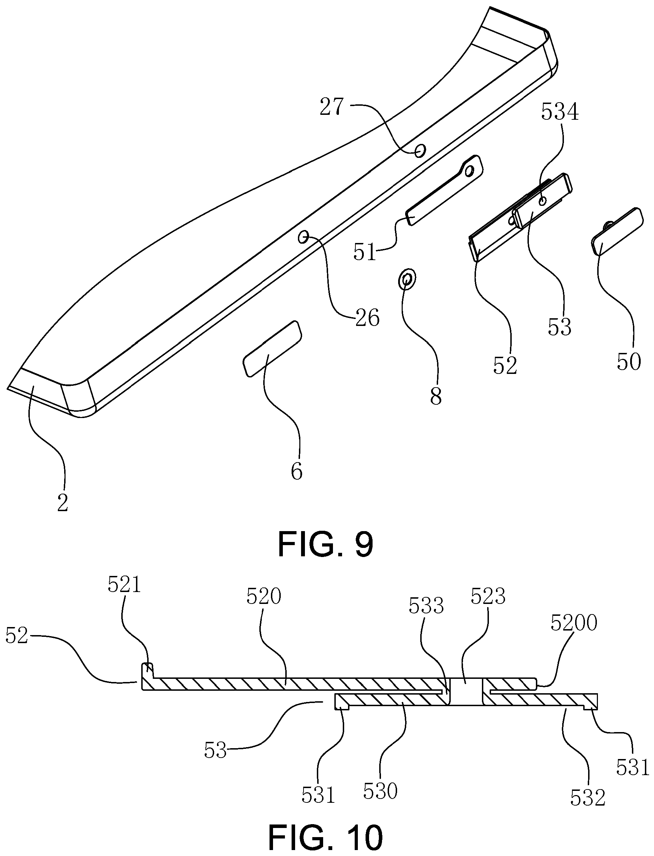

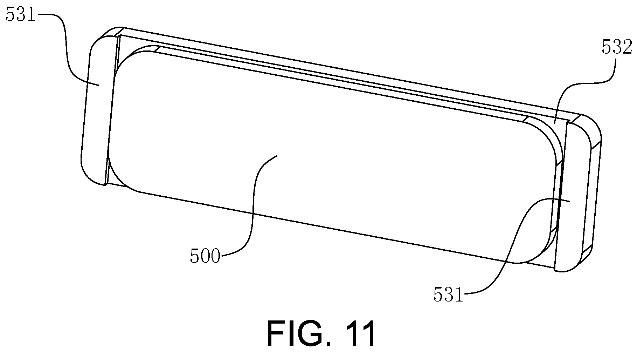

The outer insulation member 53 is made of an insulation material and is used for separating the positive metal part 50 and the shell 2 to prevent a short circuit caused by contact between the two. The material of the outer insulation member 53 may be, for example, a PFA plastic. As shown in FIG. 10 and FIG. 11, the outer insulation member 53 includes an outer insulation sheet 530 disposed between an outer surface of the shell 2 and the positive plate 500, and two strip-shaped bosses 531 located on an outer periphery of the positive plate 500. As shown in FIG. 9 to FIG. 11, the shell 2 is provided with a first through hole 27, the outer insulation member 53 is provided with a convex ring 533 connecting the outer insulation sheet 530 and the inner insulation member 52, and a second through hole 523 is provided in the convex ring 533. The connecting column 501 enters the shell 2 through the second through hole 523 to be connected to the conductive sheet 51. Through arrangement of the convex ring 533, the contact between the connecting column 501 and a hole wall of the first through hole 27 can be effectively prevented, thereby improving an insulation effect. The two bosses 531 project outward from the outer insulation sheet 530, which are located on two sides of the positive plate 500 in a length direction, respectively, and are used for preventing a short circuit caused by contact between an external object and the positive metal part 50.

As shown in FIG. 9 to FIG. 11, a through slot 532 is formed between the two bosses 531. The through slot 532 enables people to observe the fitting quality between the positive plate 500 and the outer insulation sheet 530 from a side surface (that is, a peripheral direction of the outer insulation member 53), thereby ensuring the reliable connection between the positive metal part 50 and the shell 2. It can be understood that a quantity of the bosses 531 is not limited to two. For example, two bosses 531 can also be arranged in a width direction of the positive plate 500.

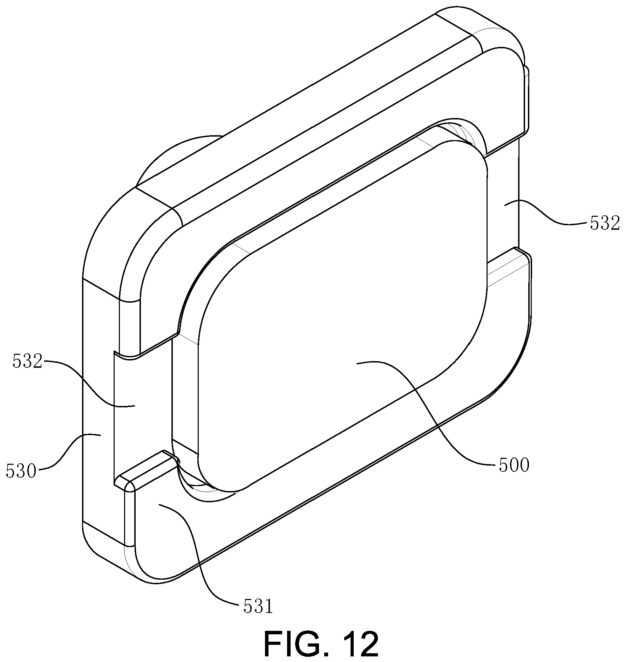

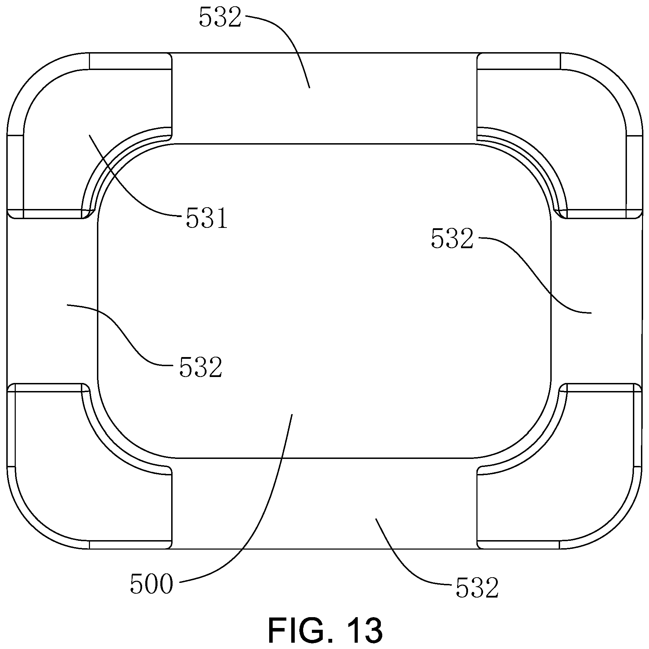

Further, as shown in FIG. 12, the bosses 531 can also be arranged in an annular shape, and the annular bosses 531 can more comprehensively isolate the internal positive plate 500. The bosses 531 are provided with through slots 532 communicated with inner and outer sides thereof, and a quantity of the through sots 532 is not limited. For example, in FIG. 12, one through slot 532 is arranged on left and right sides of the positive plate 500, respectively. In this way, the fitting quality between the positive plate 500 and the outer insulation sheet 530 is observable from the two sides of the positive plate 500. For another example, in FIG. 13, through slots 532 are arranged on left and right sides and upper and lower sides of the positive plate 500, respectively. In this way, the fitting quality between the positive plate 500 and the outer insulation sheet 530 is observable from the left and right sides and the upper and lower sides of the positive plate 500.

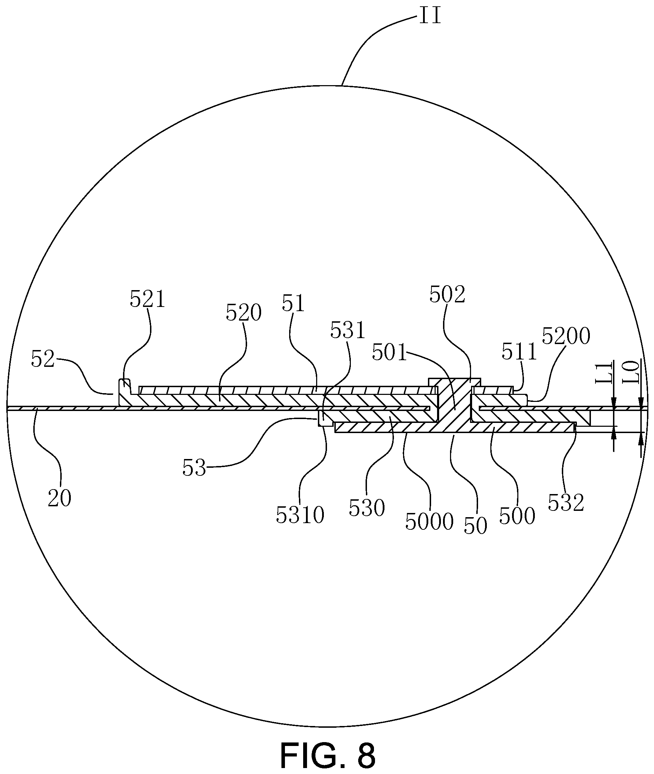

Preferably, the positive plate 500 is in a rectangular shape, and a position of the positive plate can be limited by the bosses 531 to prevent the positive plate from rotating. Since the positive metal part 50 is possible to incline when being connected to the shell 2 by a riveting process or other processes, upper and lower ends of the positive plate 500 are close to or even exceed upper and lower sides of the shell 2. The positive plate 500 and the shell 2 are likely to be directly conducted and have the risk of a short circuit due to contact with an external object. When the positive plate 500 is blocked by the bosses 531, the bosses 531 can separate the positive plate 500 and the external object, thereby improving the safety and reliability. Preferably, referring to FIG. 8, a distance L0 between a first surface 5000 of the positive plate 500 and an outer surface of the side frame 20 is greater than a distance L1 between a second surface 5310 of the boss 531 and the outer surface of the side frame 20. In this way, the positive plate 500 is more convex, thereby facilitating the contact and connection with an external electrical device.

The inner insulation member 52 is made of an insulation material and is used for separating the conductive sheet 51 and the shell 2 to prevent a short circuit caused by contact between the two. The material of the inner insulation member 52 may be, for example, a PFA plastic. As shown in FIG. 8 and FIG. 10, the inner insulation member 52 includes an inner insulation sheet 520 disposed between an inner surface of the shell 2 and the conductive sheet 51. As described above, the positive metal part 50 may be inclined. Similarly, the conductive sheet 51 may also be inclined by rotating around the connecting column 501. In this way, after a battery is completely manufactured, the conductive sheet 51 may undergo a short circuit due to contact with the cover plate 3 or the bottom plate 24. To avoid the risk of the short circuit, in the present disclosure, the inner insulation sheet 520 is configured to contact the cover plate 3 or the bottom plate 24 in advance of the conductive sheet 51 when the conductive sheet 51 is inclined, thereby improving the safety.

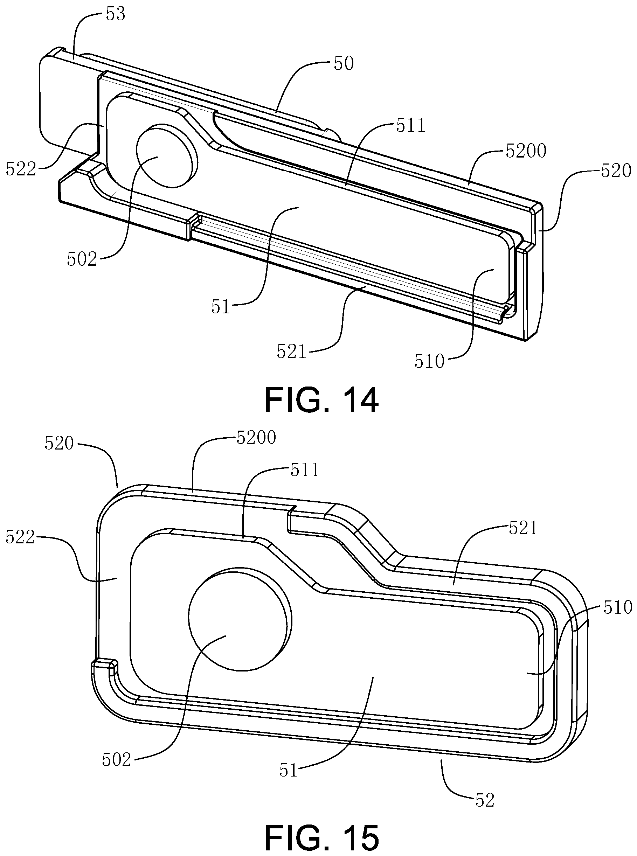

As shown in FIG. 14, as a preferred implementation, a second outer peripheral surface 5200 of the inner insulation sheet 520 is located outside a third outer peripheral surface 511 of the conductive sheet 51. In this way, the inner insulation sheet 520 can be in contact with the cover plate 3 or the bottom plate 24 in advance of the conductive sheet 51.

Further, the inner insulation member 52 further includes an isolation boss 521 connected to the conductive sheet 51. The isolation boss 521 is located outside the conductive sheet 51 and is used for preventing the conductive sheet 51 from moving to exceed the second outer peripheral surface 5200 relative to the inner insulation sheet 52. In this way, it can be ensured that the conductive sheet 51 is unable to incline to exceed the outside of the second outer peripheral surface 5200 of the inner insulation sheet 52 relative to the inner insulation sheet 52, thereby further improving the safety.

The isolation boss 521 can surround an entire outside of the conductive sheet 51, and can also surround only a partial outer periphery of the conductive sheet 51. Preferably, when the conductive sheet 51 is in a long strip shape, the isolation boss 521 at least surrounds an outer periphery of a far end 510 of the conductive sheet 51. The far end 510 refers to an end farther from the connecting column 501 in a length direction of the conductive sheet 51. Since the far end 510 is most likely to be in contact with the cover plate 3 or the bottom plate 24 when the conductive sheet 51 is rotated and inclined with the connecting column 501 as an axis, the isolation boss 521 disposed to surround the far end 510 can reliably ensure an isolation effect.

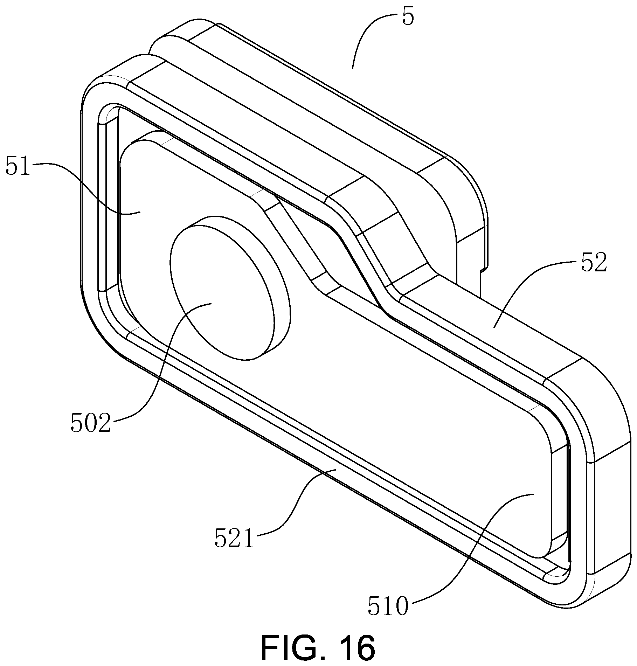

In some implementations, as shown in FIG. 14, the isolation boss 521 surrounds outer peripheries of a wide side and a long side of the conductive sheet 51. In some implementations, as shown in FIG. 15, the isolation boss 521 surrounds outer perimeters of three sides of the far end 510. In some embodiments, as shown in FIG. 16, the isolation boss 521 is in an annular shape surrounding an outer periphery of the conductive sheet 51.

Similar to the through slots 532 provided on the outer insulation member 53, as shown in FIG. 14 and FIG. 15, a notch 522 is formed on the isolation boss 521 of the inner insulation member 52. The conductive sheet 51 is observable through the notch 522 in a peripheral direction of the inner insulation member 52 to determine the fitting quality between the conductive sheet 51 and the inner insulation sheet 520.

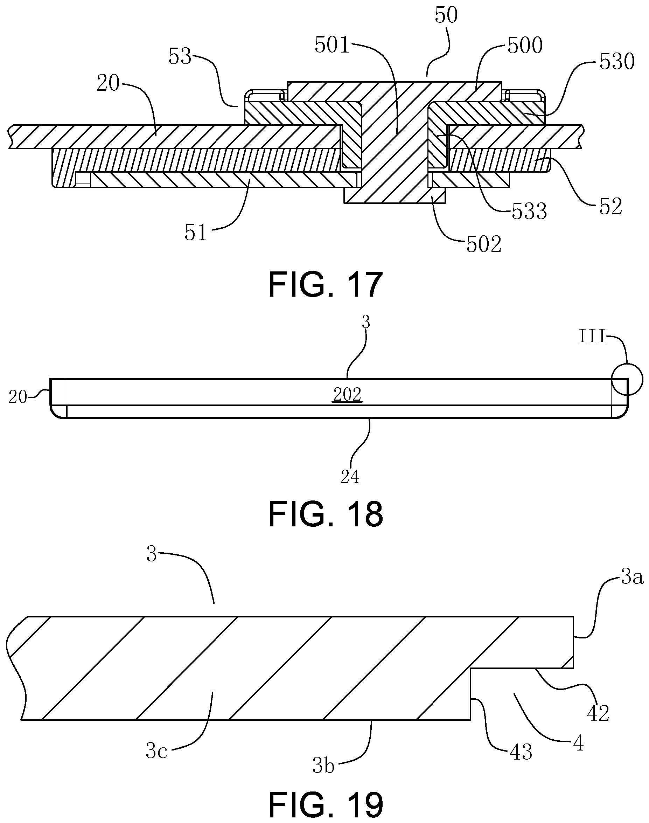

The inner insulation member 52 and the outer insulation member 53 may be integrally formed, and may also be two independent parts. For example, in cases shown in FIG. 8 and FIG. 10, the inner insulation member 52 and the outer insulation member 53 are integrally formed. In a case shown in FIG. 17, the inner insulation member 52 and the outer insulation member 53 are two independent parts, and are connected to the side frame 20 through the positive metal part 50.

The shell 2 and the cover plate 3 are both made of an alloy. A second lug of the battery cell may be connected to any one of the side frame 20, the cover plate 3 and the bottom plate 24, such that the shell 2 and the cover plate 3 become a negative electrode of a battery. In some cases, when the battery is in use, conductive members, such as conductive sheets or wires, connected to the negative electrode need to be welded to the negative electrode of the battery. However, as the shell 2 and the cover plate 3 have low thickness, the shell 2 and the cover plate 3 are likely to be damaged by a conventional welding manner. Therefore, as a preferred implementation, referring to FIG. 1 and FIG. 9, the battery housing further includes a negative plate 6 electrically connected to the shell 2. The negative plate 6 is connected to an outer surface of the shell 2, for example, connected to the shell 2 by a laser welding manner. Through arrangement of the negative plate 6, the thickness of the shell 2 can be increased. When a conductive member is welded to the negative plate 6, risks, such as weld penetration, can be effectively prevented, thereby preventing damage to the shell 2. Further, a material being easy to weld may be selected for the negative plate 6, thereby facilitating welding. In some embodiments, the negative plate 6 is a nickel sheet.

It may be understood that in addition to being connected to the shell 2, the negative plate 6 may also be connected to the cover plate 3 or the bottom plate 24.

As shown in FIG. 1 and FIG. 9, the shell 2 is provided with a liquid injection hole 26, and a liquid may be injected into the shell 2 through the liquid injection hole 26. The battery housing further includes a liquid blocking plug 8 connected to the shell 2 and sealing the liquid injection hole 26. The liquid blocking plug 8 may be, for example, welded to the shell 2 by a laser welding manner.

The shell 2, the cover plate 3 and the liquid blocking plug 8 are made of an alloy material, preferably made of stainless steel, and further preferably made of stainless steel 316L.

### Embodiment 2

Differences between the present embodiment and Embodiment 1 are that in the present embodiment, the recessed portion 4 is disposed on the cover plate 3, but is not disposed on the shell 2.

As shown in FIG. 18 to FIG. 20, an outer edge of the cover plate 3 is provided with the recessed portion 4. The recessed portion 4 is communicated with a first outer peripheral surface 3a of the cover plate 3 and a surface 3b of the cover plate 3 facing the shell 2. The first open end 200 is fitted into the recessed portion 4. Since an outer edge of the cover plate 3 is provided with the annular recessed portion 4, a part of the cover plate 3 located in the recessed portion 4 forms a convex portion 3c. When the first open end 200 is fitted into the recessed portion 4, the convex portion 3c is located in the side frame 20, such that the degree of freedom of the cover plate 3 in a peripheral direction is limited, and horizontal movement cannot be achieved, thereby reliably improving the positional accuracy of the cover plate 3 and the shell 2 and facilitating welding operation.

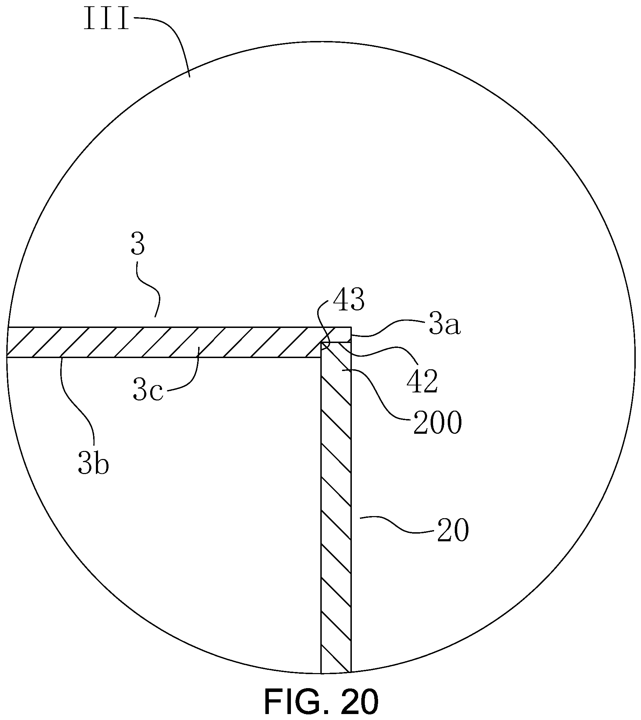

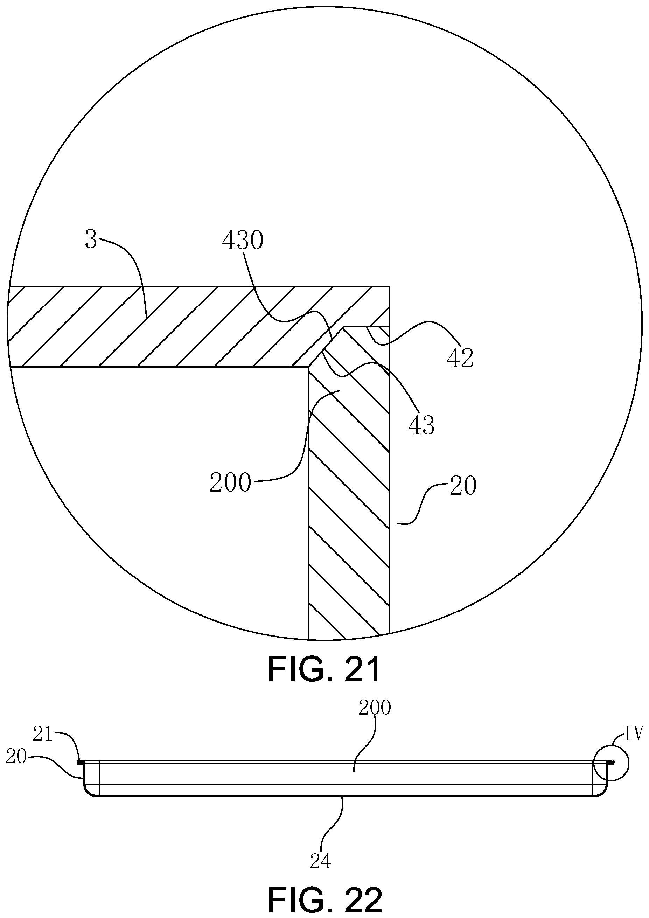

In the present embodiment, the recessed portion 4 includes a third surface 42 and a fourth surface 43 disposed at an angle, where the third surface 42 is used for being fitted with an end surface of the first open end 200, and the fourth surface 43 is in an annular shape. In some implementations, as shown in FIG. 19 and FIG. 20, the third surface 42 and the fourth surface 43 are perpendicular to each other. In other implementations, as shown in FIG. 21, the fourth surface 43 is obliquely disposed, is a pyramidal surface gradually decreased toward a side where the shell 2 is located, and can achieve a guiding effect to facilitate the arrangement of the cover plate 3 at an upper end of the shell 2. Preferably, the first open end 200 is provided with an annular pyramidal surface 430 adapted to the fourth surface 43 and can be fitted with the fourth surface 43 to reduce gaps between the two and improve the sealability.

### Embodiment 3

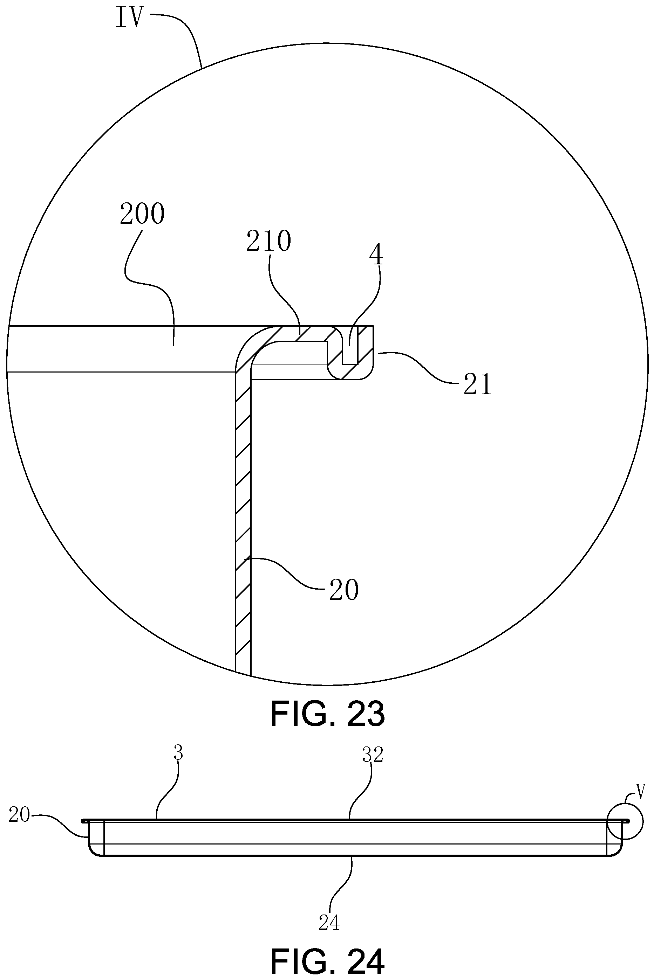

Differences between the present embodiment and Embodiment 1 are that in the present embodiment, as shown in FIG. 22 to FIG. 25, the shell 2 includes an outer ring body 21 connected to the side frame 20, and the outer ring body 21 is in an annular shape, and is located at a top of the first open end 200 of the side frame 20 and projects along an outer periphery of the side frame 20. A surface of the outer ring body 21 facing the cover plate 3 is provided with the recessed portion 4. The cover plate 3 includes a plate-shaped body 32 and a limiting portion 31 extending from an outer edge of the body 32 into the recessed portion 4. In the present embodiment, the recessed portion 4 is in an annular groove shape with only one opening end.

In some implementations, the cover plate 3 includes at least two limiting portions 31 disposed at an angle. For example, one limiting portion 31 is disposed on two adjacent sides of the rectangular cover plate 3, respectively. For another example, two limiting portions 31 are spaced apart on an outer edge of the circular first cover plate 3. Since the limiting portions 31 are disposed at an angle and are not parallel to each other, the cover plate 3 can be prevented from moving horizontally relative to the shell 2.

In other embodiments, the limiting portion 31 is in an annular shape, and has a closer fit with the annular recessed portion 4, thereby having a better limiting effect.

As a preferred implementation, the cover plate 3 is integrally formed, and a thickness of the body 32 is the same as that of the limiting portion 31. For example, the annular limiting portion 31 is stretched on an outer edge of the cover plate 3 by a stretch forming manner.

As a preferred implementation, the shell 2 is also integrally formed, and a thickness of the side frame 20 is the same as that of the outer ring body 21. For example, the outer ring body 21 is stretched at one end of the shell 2 by a stretch forming manner, and then the recessed portion 4 is formed on the outer ring body 21 by a stamping manner.

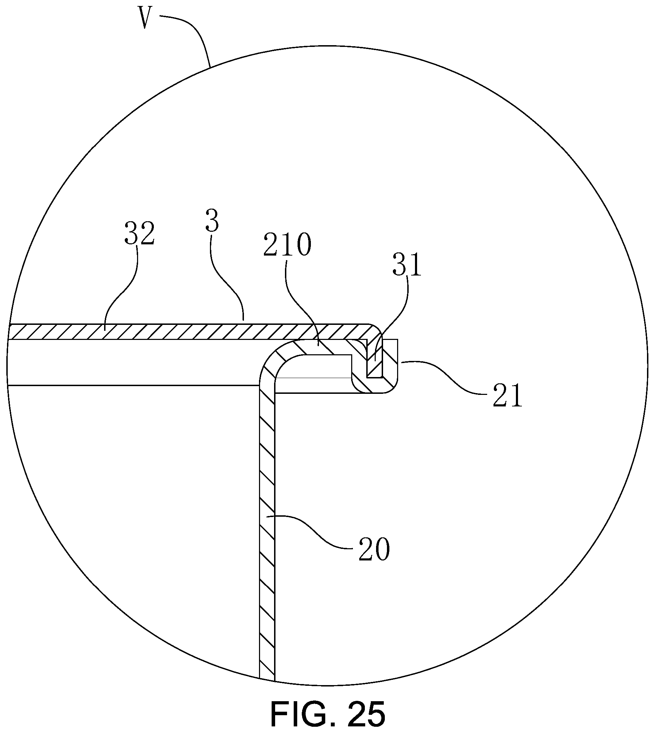

As shown in FIG. 25, the outer ring body 21 includes a horizontally disposed connecting plate portion 210, and the recessed portion 4 is located on an outer side of the connecting plate portion 210. The connecting plate portion 210 is used for being fitted with the body 32 to achieve a larger contact area when the cover plate 3 is connected to the shell 2, thereby facilitating laser welding and improving the firmness of connection.

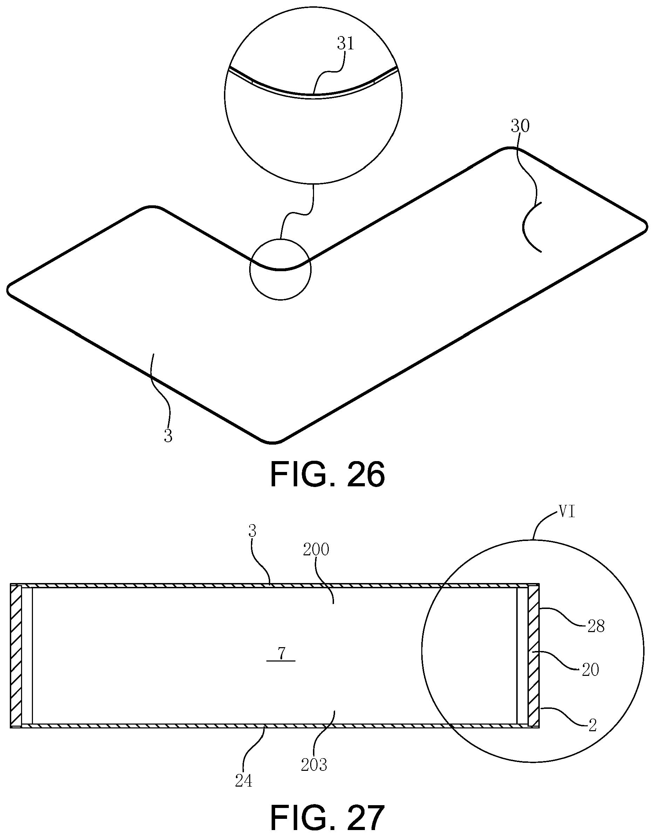

As described above, the battery housing is not limited to a rectangular shape. For example, FIG. 26 shows a cover plate 3 of an L-shaped battery housing.

### Embodiment 4

It may be understood that in addition to being integrally formed with the side frame 20, the bottom plate 24 may also be separately disposed with the side frame 20.

As shown in FIG. 27, in the present embodiment, the side frame 20 is in a tube shape, and further includes a second open end 203. The bottom plate 24 is connected to the second open end 203. The cover plate 3 and the bottom plate 24 seal the first open end 200 and the second open end 203, respectively. In the embodiment shown in FIG. 27, the side frame 20 is in a square tube shape. It may be understood that in other embodiments, the side frame 20 may also be in a round shape, an L shape, or other shapes.

In some implementations, the bottom plate 24 is a flat plate shape, and is not positioned with the side frame 20 through the aforementioned recessed portion 4.

In some implementations, one of the bottom plate 24 and the side frame 20 is provided with an annular recessed portion 4, and the other one is fitted with the recessed portion 4, that is, the two are positioned through the recessed portion 4. The structure and arrangement manner of the recessed portion 4 may refer to Embodiments 1 to 3. Further, structures of the bottom plate 24 and the cover plate 3 may be the same or different. In the same case, the two are simultaneously limited by using the same structure of a recessed portion 4. In the different case, the two are limited by using different structures of recessed portions 4.

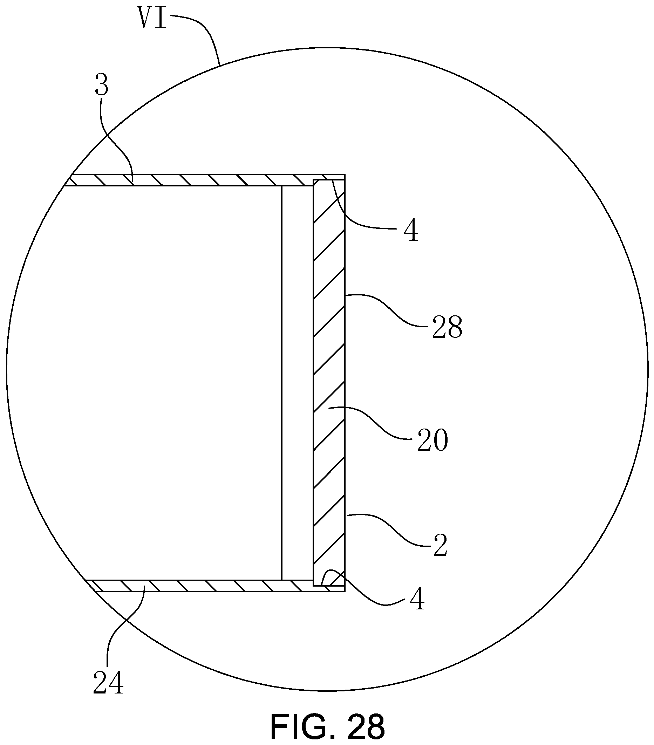

As shown in FIG. 27 and FIG. 28, in cases shown in FIG. 27 and FIG. 28, outer edges of the bottom plate 24 and the cover plate 3 are both provided with an annular recessed portion 4. Two ends of the side frame 20 are fitted with the two recessed portions 4, respectively. A closed cavity for accommodating cells and other components is formed between the cover plate 3, the side frame 20 and the bottom plate 24.

Since the two ends of the side frame 20 are sealed by using the cover plate 3 and the bottom plate 24, respectively, the cover plate 3 and the bottom plate 24 are both independent parts and are not integrally formed with the side frame 20. Therefore, transition parts for contraction, such as rounded corners, are not formed at connection positions of the side frame 20 with the cover plate 3 and the bottom plate 24, and the volume of an accommodating chamber 7 is not easily affected. Meanwhile, without the interference from the transition parts, such as the rounded corners, the shape of a cell disposed in the battery housing can be made to be fuller, and the space utilization rate is higher, such that the capacity of a prepared battery is also larger, thereby effectively improving the energy density of the battery.

A material of the shell 2 and the cover plate 3 is preferably an alloy, such as, 316L stainless steel. The alloy has good ductility and can be made to be thinner, thereby further increasing the internal space of the battery housing. The cover plate 3 and the side frame 20 as well as the bottom plate 24 and the side frame 20 are both connected by a laser welding manner. An annular weld seam is formed by way of laser welding, which can achieve a good sealing effect.

The outer edges of the cover plate 3 and the bottom plate 24 both do not exceed a fourth outer peripheral surface 28 of the side frame 20, and an annular externally convex portion is also not required to be disposed at an end portion of the side frame 20 to cooperate with the cover plate 3. In this way, the formed battery housing does not have an externally convex flange edge, thereby eliminating the step of cutting the flange edge during battery installation, and achieving installation more conveniently. Meanwhile, the fitting precision of the cover plate 2, the bottom plate 24 and the side frame 20 is higher, and the dimensional precision of the external shape of a battery is not affected due to the cutting of the flange edge.

### Embodiment 5

The present embodiment provides a battery, including the battery housing described above.

The battery further includes a cell disposed in the battery housing. The cell includes a first lug and a second lug. The first lug is connected to the conductive sheet 51, and the second lug is connected to any one of the side frame 20, the cover plate 3 and the bottom plate 24. The positive metal part 50 and the negative plate 6 are used as a positive electrode and a negative electrode of the battery, respectively.

The foregoing descriptions are merely specific implementations of the present disclosure, and any other improvements that are made based on the concept of the present disclosure are deemed to fall within the scope of protection of the present disclosure.

## Claims

1. A battery housing, **characterized by** comprising:
a shell (2), comprising a side frame (20), wherein the side frame (20) comprises a first open end (200); and
a cover plate (3), disposed at the first open end (200),
wherein one of the shell (2) and the cover plate (3) is provided with an annular recessed portion (4), and the other one is fitted with the recessed portion (4).

2. The battery housing according to claim 1, **characterized in that** a covering direction of the cover plate (3) is consistent with a recessing direction of the recessed portion (4).

3. The battery housing according to claim 1, **characterized in that** an end surface (201) of the first open end (200) is provided with the recessed portion (4), the recessed portion (4) is communicated with an inner cavity (202) of the side frame (20), and an outer edge of the cover plate (3) is fitted into the recessed portion (4).

4. The battery housing according to claim 1, **characterized in that** an outer edge of the cover plate (3) is provided with the recessed portion (4), the recessed portion (4) is communicated with a first outer peripheral surface (3a) of the cover plate (3) and a surface of the cover plate (3) facing the shell (2), and the first open end (200) is fitted into the recessed portion (4).

5. The battery housing according to claim 1, **characterized in that** the shell (2) further comprises an outer ring body (21) connected to the side frame (20), a surface of the outer ring body (21) facing the cover plate (3) is provided with the recessed portion (4), and the cover plate (3) comprises a body (32) and a limiting portion (31) extending from an outer edge of the body (32) into the recessed portion (4).

6. The battery housing according to claim 5, **characterized in that** the cover plate (3) comprises at least two of the limiting portions (31) disposed at an angle; alternatively,
the limiting portion (31) is in an annular shape.

7. The battery housing according to claim 6, **characterized in that** the cover plate (3) is integrally formed; and the shell (2) is integrally formed.

8. The battery housing according to claim 5, **characterized in that** the outer ring body (21) comprises a connecting plate portion (210) fitted with the body (32), and the recessed portion (4) is located on an outer side of the connecting plate portion (210).

9. The battery housing according to claim 1, **characterized in that** the shell (2) further comprises a bottom plate (24) connected to the side frame (20), the bottom plate (24) and the cover plate (3) are located at two ends of the side frame (20) respectively, and the bottom plate (24) and the side frame (20) are integrally formed.

10. The battery housing according to claim 1, **characterized in that** the side frame (20) is in a tube shape and further comprises a second open end (203), the shell (2) comprises a bottom plate (24) connected to the second open end (203), the cover plate (3) and the bottom plate (24) seal the first open end (200) and the second open end (203), respectively, and structures of the cover plate (3) and the bottom plate (24) are the same or different.

11. The battery housing according to any one of claims 1 to 10, **characterized in that** the battery housing further comprises a positive electrode assembly (5) connected to the shell (2), the positive electrode assembly (5) comprises a positive metal part (50), a conductive sheet (51) located on an inner side of the shell (2), an inner insulation member (52) separating the conductive sheet (51) and the shell (2), and an outer insulation member (53) separating the positive metal part (50) and the shell (2), and the positive metal part (50) comprises a positive plate (500) located on an outer side of the shell (2) and a connecting column (501) extending from the positive plate (500) into the shell (2) and connected to the conductive sheet (51).

12. The battery housing according to claim 11, **characterized in that** the outer insulation member (53) comprises an outer insulation sheet (530) located between an outer surface of the shell (2) and the positive plate (500) and bosses (531) surrounding an outer periphery of the positive plate (500);
a quantity of the bosses (531) is at least two, and a through slot (532) is formed between any two of the adjacent bosses (531); alternatively,
the bosses (531) are in an annular shape and are provided with the through slots (532) communicated with inner and outer walls thereof.

13. The battery housing according to claim 11, **characterized in that** the inner insulation member (52) comprises an inner insulation sheet (520) disposed between an inner surface of the shell (2) and the conductive sheet (51), and when the positive electrode assembly (5) is inclined, the inner insulation sheet (520) is in contact with the cover plate (3) or the bottom plate (24) of the shell (2) in advance of the conductive sheet (51).

14. The battery housing according to claim 13, **characterized in that** a second outer peripheral surface (5200) of the inner insulation sheet (520) is located outside a third outer peripheral surface (511) of the conductive sheet (51), the inner insulation member (52) further comprises an isolation boss (521) connected to the inner insulation sheet (520), and the isolation boss (521) is located outside the conductive sheet (51) and is used for preventing the conductive sheet (51) from exceeding the second outer peripheral surface (5200) of the inner insulation sheet (520).

15. The battery housing according to claim 14, **characterized in that** the isolation boss (521) is in an annular shape surrounding an outer periphery of the conductive sheet (51), the isolation boss (521) is provided with a notch (522), and the conductive sheet (51) is observable through the notch (522) in a peripheral direction of the inner insulation member (52).

16. The battery housing according to any one of claims 1 to 10, **characterized in that** the battery housing further comprises a negative plate (6) electrically connected to the shell (2), the shell (2) is provided with a liquid injection hole (26), the battery housing further comprises a liquid blocking plug (8) connected to the shell (2) and sealing the liquid injection hole (26), the shell (2), the cover plate (3) and the liquid blocking plug (8) are made of an alloy material, and the alloy material is stainless steel.

17. A battery, **characterized by** comprising the battery housing according to any one of claims 1 to 16.
